# EUROPEAN PATENT APPLICATION

(11) **EP 1 879 188 A1**
(43) Date of publication of application: **16.01.2008**
(21) Application number: 06117148.4
(22) Date of filing: 13.07.2006
(51) Int. Cl.: G11B 7/09

(54) **Pickup for accessing moving storage media and drive having the pickup**

(71) Applicant: DEUTSCHE THOMSON-BRANDT GMBH, 78048 Villingen-Schwenningen (DE)
(72) Inventor: Bammert, Michael, 78739 Hardt (DE); Suzuki, Tsuneo, 78087 Mönchweiler (DE); Dupper, Rolf, 78050 Villingen-Schwenningen (DE)
(74) Representative: Thies, Stephan

(57) **Abstract**

A pickup (P) for accessing moving storage media has a carrier (C), an actuator (A) and two or more suspension wires (4) which join the carrier (C) and the actuator (A). The actuator (A) has a body (B) with a lens (3) movable in a tracking direction (X). The suspension wires (4) are arranged substantially in parallel, are oriented parallel to information tracks (T) on the moving storage media and are arranged in two groups at opposite sides of the body (B) in the tracking direction (X). In order to improve actuator performance and/or to enable more components on the actuator (A), the suspension wires (4) within at least one of the groups are arranged side by side in the tracking direction (X) as well as in the focus direction (Y).

## Description

### BACKGROUND OF THE INVENTION

### FIELD OF THE INVENTION

The present invention is related to a pickup for accessing moving storage media according to the preamble of claim 1. Pickups are used as part of a recording and/or reproducing apparatus, e.g. of a DVD player, a DVD recorder or of similar apparatuses.

### DESCRIPTION OF THE PRIOR ART

Pickups for accessing moving storage media, referred to as optical pickups, are described in EP 1 271 493 A2. A pickup records and/or reproduces information with respect to the moving storage media, namely a turning disk, while moving in the radial direction of the disk. The pickup has a carrier with a base and a holder and an actuator with a body and a lens; the body is referred to as a bobbin. The lens is used for forming a beam spot on the disk.

Further, the pickup has six suspension wires joining the carrier, namely the holder, and the actuator. The actuator is movable relatively to the carrier in a focus direction, in a track direction and in a tilt direction, respectively. By moving the actuator with the lens, the beam spot can be accurately located on the disk.

The suspension wires are arranged substantially in parallel and are oriented in the direction of the information tracks being scanned on the media. They are arranged symmetrically in reference to the body by being soldered at two contact elements at opposite sides of the body. In addition, three suspension wires are stacked in focus direction, on each side of the body.

The suspension wires are both movably supporting the actuator, as well as applying currents to coils thereon. The coils and a magnet configuration, all together referred to as a magnetic driving portion, initiate the movements of the actuator. The actuator carries only the lens and the coils. Further optical and electronic components, such as a beam source and a beam detector, are located on the carrier.

Since a certain minimum distance between two stacked suspension wires is necessary, the height of the overall pickup in focus direction is determined by the number of the stacked suspension wires. As a result, by stacking more than three suspension wires, the overall height of the pickup in focus direction would increase, whereas small pickup dimensions are desirable, especially for portable applications.

### SUMMARY OF THE INVENTION

It is therefore desirable to improve a pickup according to the preamble of claim 1. For the sake of overall compactness, it is desirable to place more components on the movable actuator. In addition, it is desirable to improve the actuator performance. One way to achieve an improved performance of the movements of the actuator is to be able to carry stronger currents to the coils. For this and/or for enabling more components on the actuator, additional suspension wires are desirable, while the overall height of the pickup in focus direction should not be increased.

According to the invention this is achieved by the features of claim 1.

A pickup for accessing moving storage media has a carrier, an actuator with a body and a lens movable in a tracking direction and a focus direction and suspension wires joining the carrier and the actuator. The suspension wires are arranged substantially in parallel, oriented parallel to information tracks being scanned on the media and arranged in two groups at opposite sides of the body in the tracking direction. According to the invention, in at least one of the groups the suspension wires are arranged side by side in the tracking direction as well as in the focus direction.

Advantageously, suspension wires arranged side by side in tracking direction as well as in focus direction allow to increase the number of suspension wires while keeping the overall height of the pickup low. With an increasing number of suspension wires, more current can be carried to the actuator coils which improves actuator performance. In addition, increasing the number of otherwise unchanged suspension wires strengthens the elastic connection between the carrier and the actuator. As a result, the suspension wires provide the mechanical stiffness needed to carry further optical and/or electronic components added to the actuator which in turn allows to improve the overall compactness of the pickup. Alternatively, at a constant mass of the actuator body, an increased number of suspension wires allows to reduce the thickness of each wire.

Even a single suspension wire in addition to the ones needed for feeding the actuator coils advantageously allows to put onto the actuator a separately controllable extra coil, or alternatively to have a photoelectric component like the light emitting laser diode or a photodiode or signal conditioning circuit on the actuator instead of on the carrier, if one of the standard suspension wires is used as a common ground therefor. In general, the more suspension wires there are, the more electronic, opto-electronic or electromagnetic components can be put directly onto the actuator while being separately electrically accessible from the carrier.

Possible advantageous developments of the invention are specified in the dependent claims.

Preferably, the contact means of the actuator comprises two sections with soldering points for the suspension wires. The sections extend in the tracking direction from both sides of the body. The contact means are constituted by printed circuit board.

Preferably, the number of suspension wires of the pickup is an integer multiple of eight and the suspension wires are arranged in two equal-sized groups. Within each of the groups those of the suspension wires that are arranged side by side in the tracking direction are at the same position in the focus direction, and those of the suspension wires that are arranged side by side in the focus direction are at the same position in the tracking direction. With other words, the intersections or connections of the suspension wires at the plane spanned by the focus direction and the tracking direction lie on a grid defined by all possible combinations of two distinct positions in focus direction and 2n distinct positions per group in tracking direction, with n being an integer. Such an arrangement contributes to the symmetry of the overall design, which advantageously facilitates design steps like vibration analysis.

Preferably, the body of the actuator comprises additional components. Such components can be optical ones such as a laser diode, a detector, further diodes and/or optical elements. They can further be electronic components such as a modulator or electronic circuitry for laser power control and/or photodetector signal conditioning.

The carrier being an ensemble of rigidly connected elements does not preclude that typically the pickup as a whole, including carrier, suspension wires and actuator, is movable and is being moved in a direction orthogonal to information tracks on the storage medium, so that all storage locations on the medium can be accessed. In this, accessing shall encompass reading access for reading informations from the storage medium, or writing access for writing or redording informations into the storage medium, or combinations of reading and writing access.

One possible form of moving storage media is disks carrying concentric circular or spiral information tracks, with the access being of reflective type where an access light beam is being generated and focused onto the information track and a reflected light beam coming back from and being modulated by the information track is being focused onto a photo detector arrangement and being evaluated. However, it is within the scope of this invention to be used on other forms of optical recording medium having information tracks in layers, like those in card or tape form; and regardless whether the access principle is of a reflective or of a transductive type.

### BRIEF DESCRIPTION OF THE DRAWINGS

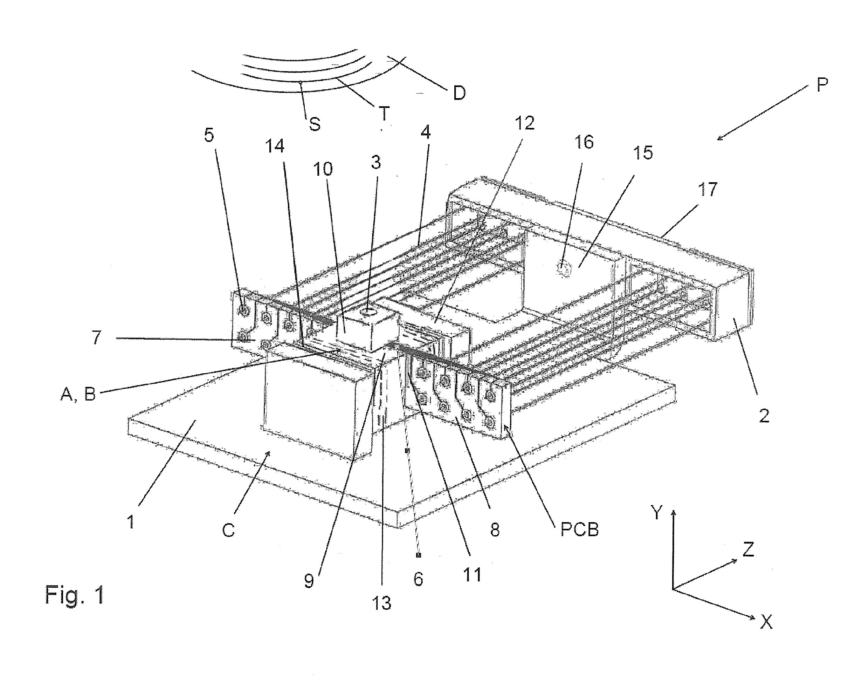

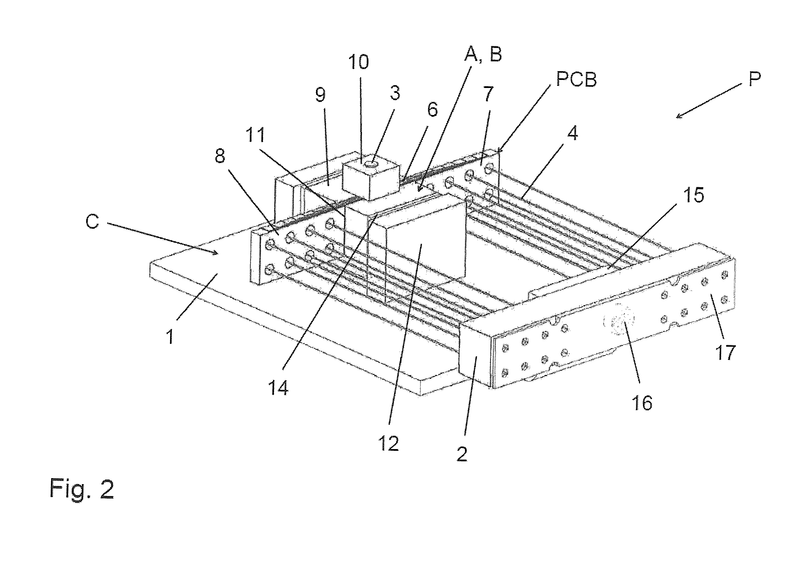

The invention will be explained in more detail using one embodiment, illustrated in figures 1 and 2.

In the Figures:
- Figure 1: shows a simplified perspective view of an embodiment of the invention and
- Figure 2: shows another simplified perspective view of the embodiment of the invention.

### DETAILED DESCRIPTION OF A FIRST EMBODIMENT OF THE INVENTION

With reference to Figures 1 and 2, according to the invention a pickup P for accessing moving storage media, namely a disk D, has a carrier C with a base 1 and a holder 2, an actuator A with a body B and a lens 3 and sixteen suspension wires 4 joining the carrier C and the actuator A. By means of the suspension with the suspension wires 4, the actuator A with the lens 3 is able to perform focus motion in a focus direction Y orthogonal to the disk D carrying substantially circular information tracks T shown in Figure 1 with strongly disproportionate distance. Additionally, the actuator A is able to perform tracking motion in a tracking direction X parallel to the surface of the disk D and orthogonal to the information tracks T. Additionally, the actuator A is able to perform so-called radial tilt motion by rotating around an information direction Z which is parallel to the tangent to the information tracks T at a scanning spot S. The suspension wires 4 are arranged in parallel and oriented in the information direction Z. They are arranged symmetrically in respect to the body B. Eight suspension wires 4 end at each of two opposite sides of the body B. Four suspension wires 4 each are situated side by side in the tracking direction X. Two groups of four suspension wires 4 are arranged on top of each other in the focus direction Y, at each side of the body B.

The actuator A further has contact means with soldering points 5, to which one end of each0 suspension wire 4 is soldered. The contact means are constituted by a printed circuit board PCB extending in the tracking direction X from one side of the body B to the other. The printed circuit board PCB has a middle part 6 and two side parts 7, 8 with the soldering points 5. The side parts 7, 8 extend from both sides of the body B.

The body B has a main corpus 9 and a top corpus 10 with the lens 3. The top corpus 10 is arranged in an upper region of the body B in the focus direction Y, at a height above the upper suspension wires 4.

The main corpus 9 has a substantially square form with an upper slot 11 which extends in the tracking direction X through the middle of the main corpus 9. The printed circuit board is located with its middle part 5 in this slot 11. The main corpus 9 comprises additional optical and/or electronic components, not shown. The top corpus 10 is centred on top of the main corpus 9. The suspension wires 4 connect the actuator A with the carrier C in a way that the actuator A is suspended over the base 1 of the carrier C.

The pickup P further comprises a magnet configuration with at least two magnets 12 and two inner yokes 13, all fixed on the base 1. The magnets 12 are situated on the base 1 in front of the two opposite sides of the body, e.g. of the main corpus 9, in the information direction Z. The inner yokes 13, indicated by dashed lines in Figure 1, are facing the magnets 12 in inner openings of the main corpus 9. The main corpus 9 carries several coils, not shown, which cooperate with the magnet configuration. Correspondingly, they are arranged on both sides of the main corpus 9 in the information direction Z. Each magnet 12, its inner yoke 13 and a corresponding part of the magnetically conductive base 1, constitute a magnetic circuit with an air gap in which the corresponding coil is located. The coils are formed as printed coils or as fine pattern coils on a coil board 14.

The base 1 extends in a plane orthogonal to the focus direction Y and parallel to the disk D, i.e. in the plane spanned by the tracking direction X and the information direction Z. The base 1 is connected with the holder 2 over a strap 15 by a screw 16. The holder 2 comprises a further printed circuit board 17 with soldering points for the other end of the suspension wires 4. The printed circuit board 17 is located at that side of the holder 2 which is opposite to the actuator A. The holder 2 is constituted by a damping block with a damping material inside, which damps the suspension wires 4 extending through the holder 2.

A pickup P according to this invention is usable in the so-called slide or sled design of optical media drives, where it is shiftably fitted to a frame structure of the drive, with appropriate linear driving means for realising the shift, like linear motors or a motor driven threaded rod. Alternatively, the pickup P according to this invention is also usable in the so-called swivel arm design, where it is pivotably mounted on the end of an arm having a pivoting axis parallel to the focus direction. In that way, the pickup P is movable across the tracks T on the surface of the disk D along an arc which has its main extension in the tracking direction X.

## Claims

1. A pickup (P) for accessing moving storage media (D) carrying substantially parallel information tracks (T), the pickup (P) having a carrier (C), an actuator (A) and suspension wires (4) joining the carrier (C) and the actuator (A), the actuator (A) having a body (B) with a lens (3) movable in a tracking direction (X) and in a focus direction (Y), and the suspension wires (4) being arranged substantially in parallel, being oriented parallel to the information tracks (T) and being arranged in two groups at opposite sides of the body (B) in the tracking direction (X), the pickup (P) **characterized in that** within at least one of the groups the suspension wires (4) are arranged side by side in the tracking direction (X) as well as in the focus direction (Y).

2. A pickup (P) according to claim 1, where the actuator (A) further has contact means (6, 7, 8) with soldering points (5) for the suspension wires (4), the contact means (6, 7, 8) comprising two sections (7, 8) with the soldering points (5) extending in the tracking direction (X) from both sides of the body (B).

3. A pickup (P) according to claim 2, where the contact means (6,7,8) are constituted by a printed circuit board (PCB) extending from one side of the body (B) to the other.

4. A pickup (P) according to one of claims 1 to 3, where the number of suspension wires (4) is an integer multiple of eight, the suspension wires (4) being arranged in two equal-sized groups, and where within each of the groups those of the suspension wires (4) that are arranged side by side in the tracking direction (X) are at the same position in the focus direction (Y), and those of the suspension wires (4) that are arranged side by side in the focus direction (Y) are at the same position in the tracking direction (X).

5. A pickup (P) according to one of claims 1 to 4, where the body (B) comprises at least one additional optical or electronic component.

6. The pickup of Claim 5, where the additional component is one of a laser diode, a photodetector, a laser power control circuit or a photodetector signal conditioning circuit.

7. A moving storage media drive **characterised in that** it has a pickup (P) according to one of claims 1 to 6.
